Europäisches Patentamt

European Patent Office

Office européen des brevets

(19)

(11) EP 1 548 924 A1

(12) EUROPEAN PATENT APPLICATION

(43) Date of publication:
29.06.2005 Bulletin 2005/26

(51) Int Cl.⁷: H02N 3/00

(21) Application number: 04029814.3

(22) Date of filing: 16.12.2004

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 24.12.2003 IT to20031043

(71) Applicant: C.R.F. Società Consortile per Azioni
10043 Orbassano (Torino) (IT)

(72) Inventors:
• Zvezdin, Anatolii
  10043 Orbassano (Torino) (IT)
• Brignone, Mauro
  10043 Orbassano (Torino) (IT)
• Repetto, Piermario
  10043 Orbassano (Torino) (IT)

• Innocenti, Gianfranco
  10043 Orbassano (Torino) (IT)
• Pizzi, Marco
  10043 Orbassano (Torino) (OM)
• Li Pira, Nello
  10043 Orbassano (Torino) (IT)
• Lambertini, Vito
  10043 Orbassano (Torino) (IT)
• Sgroi, Mauro
  10043 Orbassano (Torino) (IT)
• Bollito, Gianluca
  10043 Orbassano (Torino) (IT)

(74) Representative: Quinterno, Giuseppe et al
Jacobacci & Partners S.p.A.
Corso Emilia, 8
10152 Torino (IT)

(54) **A microcombustion electricity generator**

(57) The electricity generator (1) comprises a microcombustor (2) provided with a fuel injector (3) and acting to produce at an exhaust outlet (5) a flow of exhaust gas in plasma state comprising positive ions and electrons separated from one another, and a conversion device (6) coupled to the outlet (5) of the microcombustor (2). The conversion device comprises an electrically insulating duct (7) coupled to the said outlet (5) of the microcombustor (2) and provided in its initial portion (7a) with separation and capture electrodes (13,8;18) for capturing the negative charges (electrons) of the plasma in such a way that downstream the plasma comprises only positive ions (I). After the initial portion (7a) the duct (7) has an intermediate portion (7b) provided with an outer cladding (12) of conductive material insulated from the plasma, the ends of which are connectable to a load(L). In operation the flow of positive ions in the intermediate portion (7a) of the duct (7) electrostatically induces in the conductive cladding (12) a negative charge which propagates in the cladding (12) along the direction of flow of the plasma in the intermediate portion (7b) of the duct (7) thereby generating a flow of electric current in the load (L).

FIG. 1

## Description

The present invention relates to a microcombustion electricity generator, which allows the kinetic energy of a plasma generated by combustion to be transformed into an electric current in a utiliser device or external load.

The electricity generator according to the invention is characterised in that it comprises

- a microcombustor provided with at least one electrically controlled fuel injector, and operable to produce, at an exhaust outlet, a flow of exhaust gas in plasma state, comprising positive ions and electrons separated from one another; and
- a conversion device coupled to the said exhaust outlet of the microcombustor, and comprising
- a duct of electrically insulating material coupled to the said exhaust outlet of the microcombustor and provided in its initial portion with means for separation and capture of the negative charges (electrons) of the plasma, in such a way that
- downstream of the said initial portion of the duct the plasma comprises substantially only positive ions;
- downstream of the said initial portion the duct has an intermediate portion provided with an external cladding of electrically conductive material insulated from the said plasma, the ends of which are connectable to a load or electric utiliser device;
- the arrangement being such that in operation the flow of positive ions in the said intermediate portion of the duct induces, electrostatically in the said conductive cladding, a negative charge which propagates in the said cladding substantially in the direction of flow of the plasma in the said intermediate portion of the duct thereby generating a flow of electrical current in the load.

Further characteristics and advantages of the invention will become apparent from the following detailed description, given purely by way of non-limitative example, with reference to the attached drawings, in which:

Figure 1 is a partially sectioned schematic representation of a microcombustion electricity generator according to the invention; and

Figure 2 is a partial illustration of a variant embodiment.

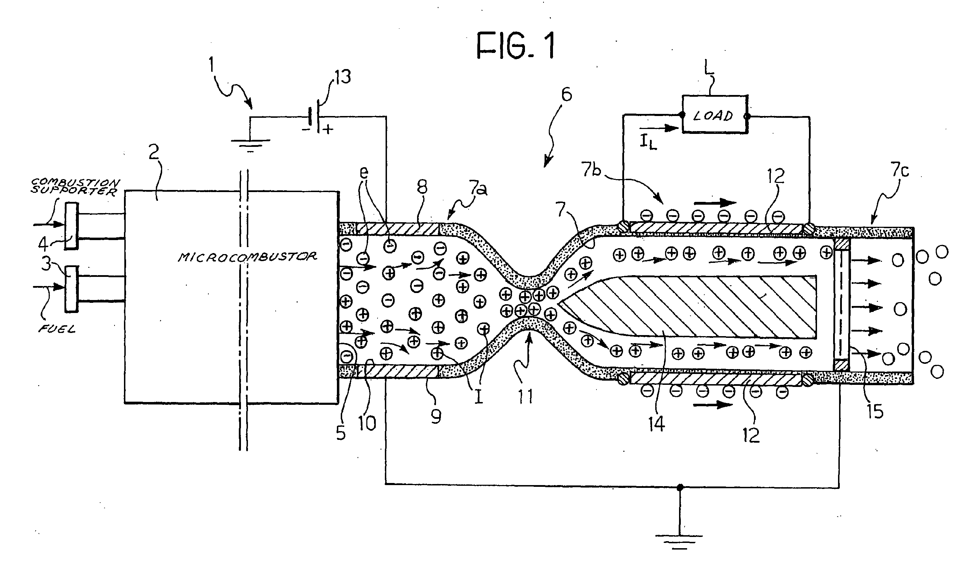

An electricity generator according to the invention is generally indicated 1 in Figure 1.

This generator comprises a microcombustor 2 of type known per se, provided with at least one electrically controlled fuel injector 3 and a device 4 for feeding a flow of combustion supporter.

The microcombustor 2 has an exhaust outlet 5 to which is coupled the inlet of a conversion device generally indicated 6.

The conversion device 6 comprises a duct 7 of electrically insulating material, for example a ceramic material.

The duct 7 has an inlet end 7a coupled to the exhaust 5 of the microcombustor 2. This portion 7a of the duct 7 has two facing metal electrodes 8 and 9 on its walls, separated from one another and parallel to the direction of flow of the exhaust gas.

One of the two electrodes, indicated 8, is connected to the positive pole of an external voltage generator 13. The other electrode 9, on the side facing the flow, is covered with a thin layer of dielectric material 10 in such a way that the plasma constituted by the exhaust gas from the microcombustor does not come into direct contact with it, and is connected to the negative pole of the said voltage generator 13.

Downstream of the electrodes 8 and 9 the duct 7 forms a restriction defining a nozzle 11 for the purpose of increasing the speed of flow of the positive charges.

The intermediate portion 7b of the duct 7 downstream of the nozzle 11, has an external metal cladding layer indicated 12. The opposite ends of this metal cladding are connected by means of conductors, such as wires or suitable electrical contacts, to a utiliser device or external load L.

Within the section 7b of the duct 7 is disposed a shaped body 14 of electrically insulating material, for example ceramic, acting to define a duct with a circular annular section for the plasma flow.

Finally, the duct 7 has an outlet end for escape of the exhaust gas, indicated 7c; this end is provided with an essentially transverse metal grille 15 connected to the negative pole of the voltage generator 13.

In operation the microcombustor 2 emits into the duct 7 of the conversion device 6 a stream of exhaust gas in plasma state comprising positive ions and electrons separated from one another.

In Figure 1 these ions and the electrons of the plasma have been indicated as I and e respectively, and have been symbolically represented by means of small circles containing the conventional sign for their electrical charge.

The electrodes 8 and 9 connected to the voltage supply 13 generate within the duct 7a an electric field perpendicular to the direction of flow of charges. Because of the said electric field the electrical charges forming part of the plasma are diverted towards the electrodes of opposite sign: the electrons e are "captured" by the electrode 8 connected to the positive pole of the generator 13, the positive ions I cannot on the other hand come into contact with the negative electrode 9 by virtue of the presence of the insulating layer 10, and therefore proceed in their motion towards the outlet end of the duct 7. Therefore the plasma becomes a stream of essentially only positive charges.

The nozzle 11 has the function of further accelerating the stream of ions I.

In the subsequent section 7b of the duct 7 the positive ions I cause the appearance of negative electric charges on the external metal cladding 12 (by electrostatic induction): the positive ions I yield part of their kinetic energy to these negative charges by "dragging them" in the metal conductor along the direction of movement of the plasma.

The ends of the conductive cladding 12 are connected to a utiliser device L which closes an electric circuit in which current is caused to circulate.

To increase the interface surface and interaction between the plasma of ions I and the conductive cladding 12 in the duct 7 a separator 14 is conveniently introduced in such a way as to permit the plasma to distribute itself through a section in the form of a circular ring.

It can be observed that the outer metal layer 12 is conveniently insulated from the flow of plasma so that the positive ions I are not neutralised in contact with it.

The outlet grille 15 is electrically insulated from the outer metal layer 12 of the duct 7, and neutralises the positive ions of the plasma which pass through it. The terminal section or outlet 7c of the duct 7 represents the exhaust of neutralised gas.

In relation to the duct 7 it can be seen that its minimum dimension is tied to the condition that it must exist in the plasma state, which requires that the Debye ratio of the trajectory which one electron describes about an ion must be largely less than the minimum dimension d of the container in which the plasma is confined, according to the relation

$$d >> \sqrt{kT / 4\pi e^2 n}$$

where k is the Boltzmann constant, T is the (absolute) temperature, $\underline{e}$ is the electron charge, and n is the plasma density.

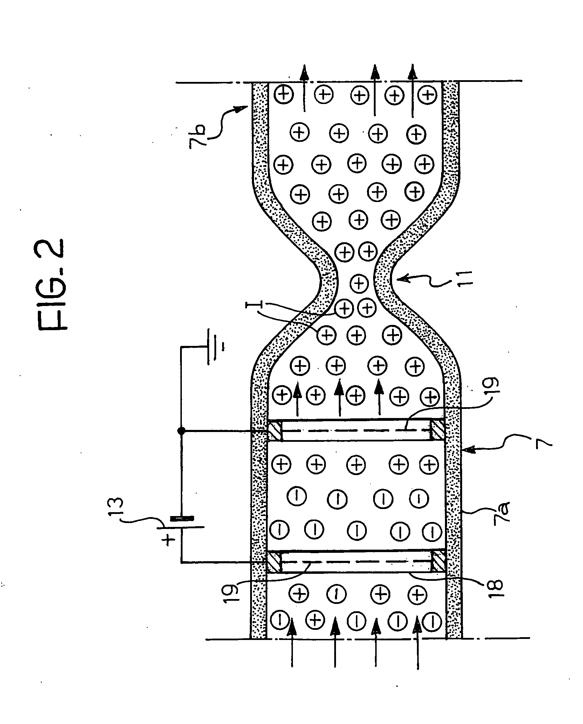

The separation of the positive and negative charges of the plasma in the duct 7 can take place, not only by way of the two electrodes 8 and 9 described, but also by two metal grilles 18 and 19 connected to the positive and negative poles of an external voltage generator 13 and located axially spaced from one another transversely of the direction of flow of the plasma. This configuration is represented in Figure 2 which schematically reproduces in section the initial part 7a of the duct 7.

Naturally, the principle of the invention remaining the same, the embodiments and details of construction can be widely varied with respect to what has been described and illustrated purely by way of non-limitative example without by this departing from the ambient of the invention as defined in the annexed claims.

**Claims**

1. An electricity generator (1) comprising

   - a microcombustor (2) provided with at least one electrically controlled fuel injector (3) and operable to produce, at an exhaust outlet (5), a flow of exhaust gas in plasma state comprising positive ions (I) and electrons separated from one another; and
   - a conversion device (6) coupled to the said exhaust outlet (5) of the microcombustor (2), and comprising
   - a duct (7) of electrically insulating material coupled to the said exhaust outlet (5) of the microcombustor (2) and provided in its initial portion (7a) with separation and capture means (13, 8; 18) for the negative charges (electrons) of the plasma, in such a way that
   - downstream of the said initial portion of the duct (7a) the plasma comprises substantially only positive ions (I);
   - downstream of the said initial portion (7a) the duct (7) has an intermediate portion (7b) provided with an external cladding (12) of electrically conductive material insulated from the said plasma, the ends of which are connectable to a load or electric utiliser device (L);
   - the arrangement being such that, in operation, the flow of positive ions (I) in the said intermediate portion (7a) of the duct (7) electrostatically induces in the said conductive cladding (12) a negative charge which propagates in the said cladding (12) substantially along the direction of flow of the plasma in the said intermediate portion (7b) of the duct (7) generating a flow of electric current in the load (L).

2. An electricity generator according to Claim 1, in which the said separation and capture means (13, 8) for the negative charges (e) comprise an electrode (8) operatively in contact with the plasma in the said initial portion (7a) of the duct (7), the said electrode (8) being connected to the positive pole of a voltage generator (13).

3. An electricity generator according to Claim 2, in which a second electrode (9) is associated with the wall of the said initial part (7a) of the duct (7) in facing relation to the said first electrode (8) and insulated from the plasma; the said second electrode (9) being connected to the negative pole of the said voltage generator (13).

4. An electricity generator according to Claim 1, in which the said separation and capture means (13, 18) of the negative charges (e) comprise a (first) conductive grille (18) disposed transversely in the said initial portion (7a) of the duct (7) and connected to the positive pole of a voltage source (13).

5. An electricity generator according to Claim 4, in which a second conductive grille (19) is disposed transversely in the said initial portion (7a) of the duct (7) downstream of the said first grille (18), the said second grille (19) being connected to the negative pole of the said voltage source (13) .

6. An electricity generator according to any of Claims 2 to 5, in which a neutralising grille (15) connected to the negative pole of the said voltage source (13) is disposed in the terminal or outlet portion (7a) of the duct (7).

7. An electricity generator according to any preceding claim, in which between the initial portion (7a) and the intermediate portion (7b) the duct (7) has a narrow section (11) in the form of a nozzle.

8. An electricity generator according to any preceding claim, in which in the said intermediate portion (7b) of the duct (7) is disposed a shaped element (14) acting to define a passage of annular form for the said plasma.

9. An electricity generator according to Claims 7 and 8, in which the narrow section (11) in the duct (7) is located upstream of the said shaped element (14).

FIG. 1

LOAD

MICROCOMBUSTOR

COMBUSTION SUPPORTER

FUEL

FIG. 2

**European Patent Office**

**EUROPEAN SEARCH REPORT**

Application Number

EP 04 02 9814

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 648 272 A (JOHN MENZIES KAY; THOMAS SYMINGTON MCLEOD) 3 January 1951 (1951-01-03) * page 1, line 9 - line 37; figure 4 * * page 1, line 56 - line 65 * * page 2, line 53 - line 71 * * page 3, line 11 - line 19 * * page 3, line 37 - line 41 * * page 3, line 92 - line 98 * * page 4, line 13 - line 64 * ----- | 1-3,6,7 | H02N3/00 |
| A | US 3 638 054 A (RICHARD F. HONIGSBAUM) 25 January 1972 (1972-01-25) * column 5, line 46 - column 6, line 15; figure 2 * ----- | 1,2,7,8 | |
| A | DE 639 000 C (DIPL.-ING. ANDOR KERTESZ) 26 November 1936 (1936-11-26) * page 2, line 65 - line 99; figure 1 * ----- | 1,6 | |
| A | BE 525 363 A (S. KRAPF) 25 May 1956 (1956-05-25) * page 1, line 15 - line 19; figure 1 * * page 2, line 2 - line 9 * ----- | 1 | TECHNICAL FIELDS SEARCHED (Int.Cl.7) H02N |

The present search report has been drawn up for all claims

| Place of search | Date of completion of the search | Examiner |
|---|---|---|
| The Hague | 14 April 2005 | Contreras Sampayo, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 02 9814

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2005

| Patent document cited in search report | | Publication date | Patent family member(s) | Publication date |
|---|---|---|---|---|
| GB 648272 | A | 03-01-1951 | NONE | |
| US 3638054 | A | 25-01-1972 | GB 1309594 A | 14-03-1973 |
| DE 639000 | C | 26-11-1936 | NONE | |
| BE 525363 | A | | NONE | |

For more details about this annex : see Official Journal of the European Patent Office, No. 12/82